# DEMANDE DE BREVET EUROPEEN

(11) **EP 1 029 578 A1**
(43) Date de publication de la demande: **23.08.2000**
(21) Numéro de dépôt: 00400022.0
(22) Date de dépôt: 06.01.2000
(51) Int. Cl.: B01D 53/22

(54) **Procédé et installation de récupération et/ou de purification du protoxyde d'azote contenu dans un gaz-déchet.**

(30) Priorité: 17.02.1999 FR 9901908
(71) Demandeur: L'air Liquide Société Anonyme pour l'étude et l'exploration des procédés Georges Claude, 75321 Paris Cédex 07 (FR)
(72) Inventeur: Chevalier, Gilbert, 78960 Voisins le Bretonneux (FR); Urner, Philippe, 1024 Ecublenz (CH)
(74) Mandataire: Le Moenner, Gabriel

(57) **Abrégé**

L'invention concerne une installation et un procédé de récupération et/ou de purification d'au moins une partie du protoxyde d'azote (N₂O) contenu dans un flux de gaz-déchet contenant du protoxyde d'azote et au moins un autre composé gazeux, dans lequel :
(a) on sépare par perméation au moins une partie protoxyde d'azote contenu dans le flux de gaz-déchet, et
(b) on récupère au moins une partie du protoxyde d'azote gazeux séparé à l'étape (a).

De préférence, la source de flux de gaz-déchet est une unité industrielle mettant en oeuvre un procédé industriel rejetant ledit gaz-déchet, de préférence une unité de fabrication d'acide adipique, une unité de fabrication de protoxyde d'azote, une unité de fabrication d'acide glycoxylique ou une unité de fabrication d'acide nitrique.

## Description

La présente invention concerne un procédé et une installation de récupération et/ou de purification du protoxyde d'azote (N₂O) contenu dans un flux de gaz-déchet, notamment un flux de gaz rejeté par une unité industrielle produisant de l'acide adipique, de l'acide nitrique, de l'acide glycoxylique, du protoxyde d'azote ou du phénol.

Actuellement, dans le but de participer à la préservation de l'environnement, de nombreux efforts sont faits par les industriels pour mettre en place des systèmes de retraitement des déchets, notamment des déchets gazeux, telles les fumées de combustion, qui jusqu'alors étaient souvent rejetés à l'atmosphère sans traitement préalable.

Ainsi, le protoxyde d'azote (N₂O) est un composé qui, sous forme gazeuse, est considéré comme potentiellement actif dans le phénomène de destruction de la couche d'ozone stratosphérique, étant donné que celuici possède une aptitude importante de décomposition en NOₓ sous l'effet du rayonnement UV naturel.

En outre, le protoxyde d'azote participe à l'effet de serre de manière analogue à d'autres gaz réglementés comme le dioxyde de carbone (CO₂) ou les composés fluorocarbonés, tels les CFC.

Le protoxyde d'azote se retrouve habituellement dans les gaz-déchets ou les gaz d'évents rejetés à l'atmosphère par certaines unités industrielles, telles les unités de fabrication d'acides adipiques ou les unités de fabrication, de purification et stockage de protoxyde d'azote.

Il est donc nécessaire, si l'on veut préserver l'environnement, de contrôler la quantité de protoxyde d'azote rejeté par ce type d'unité industrielle.

Le problème qui se pose est donc de pouvoir récupérer et, si possible recycler ou valoriser, de manière efficace le protoxyde d'azote contenu dans un gaz-déchet ou un gaz d'évent et ce, même lorsque la proportion de protoxyde d'azote dans ce gaz-déchet est élevée, par exemple de plus de 20 %, voire plus de 50 %.

La présente invention concerne alors un procédé de récupération et/ou de purification d'au moins une partie du protoxyde d'azote (N₂O) contenu dans un flux de gaz-déchet contenant du protoxyde d'azote et au moins un autre composé gazeux, dans lequel :
(a) on sépare par perméation au moins une partie protoxyde d'azote contenu dans le flux de gaz-déchet, et
(b) on récupère au moins une partie du protoxyde d'azote gazeux séparé à l'étape (a).

Dans le cadre de l'invention, on entend par "gaz-déchet", un gaz ou mélange gazeux contenant du protoxyde d'azote classiquement rejeté à l'atmosphère avec ou sans traitement préalable.

Selon le cas, le procédé de l'invention peut comprendre l'une ou plusieurs des caractéristiques suivantes :
- le flux de gaz-déchet à séparer contient de 5 à 99,9 % de protoxyde d'azote, de préférence 20 à 99,9 % en volume de protoxyde d'azote, de préférence de 50 à 99,9 % de protoxyde d'azote en volume ;
- le flux de gaz-déchet à séparer contient, en outre, au moins un composé gazeux choisi dans le groupe formé par l'azote, l'oxygène, le monoxyde de carbone et les composés gazeux ayant une vitesse de perméation différente de celle du N₂O ;
- la perméation est réalisée par passage du flux de gaz-déchet à séparer dans au moins un module de perméation, de préférence au moins un module à fibres membranaires ;
- la perméation est réalisée par passage du flux de gaz-déchet à séparer dans plusieurs modules de perméation, de préférence à fibres membranaires et/ou agencés en cascade ;
- à l'étape (b), on récupère un gaz contenant de 80 % à 100 % de protoxyde d'azote, de préférence au moins 90 % de protoxyde d'azote, de préférence au moins 95 % de protoxyde d'azote ;
- le flux de gaz-déchet à séparer est un gaz de rejet émanant d'un procédé industriel, de préférence un gaz de rejet émanant d'un procédé de fabrication d'acide adipique, d'un procédé de fabrication de protoxyde d'azote, d'un procédé de fabrication de phénol, d'un procédé de fabrication d'acide nitrique ou d'un procédé de fabrication glycoxylique ;
- le gaz-déchet à séparer est à une température comprise entre -30°C et +80°C, de préférence -20 °C à +60°C ;
- le gaz-déchet est à une pression de 10⁵ Pa à 10⁷ Pa, de préférence de 10⁶ Pa à 6.10⁶ Pa ;
- à l'étape (b), on récupère un gaz contenant majoritairement du protoxyde d'azote en sortie perméat d'au moins un module de perméation ;
- à l'étape (b), on récupère un gaz contenant majoritairement du protoxyde d'azote en sortie retentât d'au moins un module.

L'invention concerne également une installation industrielle susceptible de mettre en oeuvre le procédé de l'invention, laquelle installation industrielle permet la récupération et/ou la purification d'au moins une partie du protoxyde d'azote contenu dans un flux de gaz-déchet contenant du protoxyde d'azote et au moins un autre composé gazeux, ladite installation comprenant:
- au moins une source de flux de gaz-déchet contenant du protoxyde d'azote et au moins un autre composé gazeux,
- des moyens de perméation permettant de séparer par perméation au moins une partie du protoxyde d'azote contenu dans le flux de gaz-déchet, et
- des moyens de récupération d'au moins une partie du protoxyde d'azote séparé par les moyens de perméation.

Selon le cas, l'installation peut comprendre l'une ou plusieurs des caractéristiques suivantes :
- la source de flux de gaz-déchet est une unité industrielle mettant en oeuvre un procédé industriel rejetant le gaz-déchet, de préférence une unité de fabrication d'acide adipique, une unité de fabrication de protoxyde d'azote ou une unité de fabrication de phénol, une unité de fabrication d'acide glycoxylique ou une unité de fabrication d'acide nitrique ;
- les moyens de perméation comportent un ou plusieurs modules membranaires.

L'invention va maintenant être décrite plus en détail à l'aide d'exemples et en référence aux figures annexées données à titre illustratif nais non limitatif.

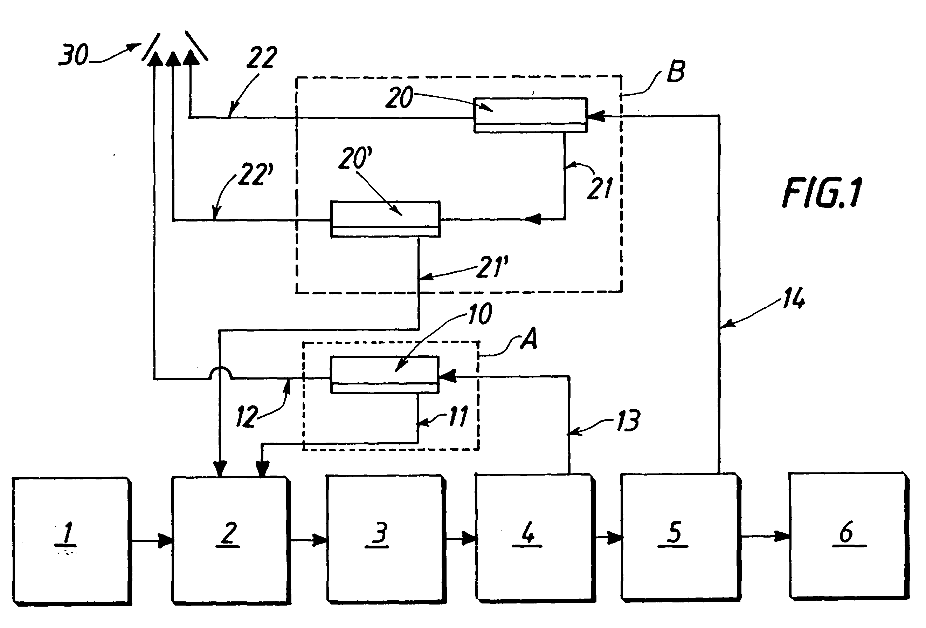

La figure 1 représente le schéma d'une unité de production de protoxyde d'azote (N₂O) intégrant le procédé de récupération et/ou de purification du protoxyde d'azote gazeux contenu dans les gaz-déchets ou gaz d'évents provenant de ladite unité de production et habituellement rejetés à l'atmosphère.

Plus précisément, le protoxyde d'azote (N₂O) est produit classiquement dans une unité de production 1 de protoxyde d'azote, puis stocké dans une première unité ou site de stockage 2 sous forme gazeuse, par exemple.

Classiquement, la production de protoxyde d'azote dans l'unité 1 de fabrication peut être réalisée de manière à obtenir un débit de production de l'ordre de 300 Nm³/h et une pureté du protoxyde d'azote ainsi produit de l'ordre de 99 %; les impuretés étant principalement de l'oxygène et de l'azote.

Le protoxyde d'azote gazeux provenant du premier site de stockage 2 est ensuite liquéfié dans une unité de liquéfaction 3 avant d'être envoyé vers une deuxième unité ou site de stockage 4 et/ou vers une troisième unité ou site de stockage 5, avant d'être envoyé vers une unité de conditionnement 6, par exemple un site où le N₂O est conditionné dans des récipients pressurisés, telles des bouteilles de gaz, plus facilement transportables.

Au sein de la deuxième unité ou site de stockage 4, le protoxyde d'azote est stocké à température ambiante, par exemple à 20°C, et à haute pression, par exemple à 60.10⁵ Pa, alors que dans la troisième unité ou site de stockage 5, le protoxyde d'azote est conservé à une température plus basse, par exemple à moins -20°C, et à une pression également plus basse, par exemple 20.10⁵ Pa.

Par ailleurs, au sein de ces deux unités ou sites de stockage 4 et 5, le protoxyde d'azote se trouve sous deux états différents, à savoir à l'état gazeux et à l'état liquide, la phase gazeuse étant en équilibre avec la phase liquide.

Au sein des deuxième et troisième unités de stockage 4 et 5, la pureté du protoxyde d'azote constituant la phase liquide est approximativement de 99 %.

Par contre, la pureté de la phase gazeuse ainsi stockée est inférieure à celle de la phase liquide, c'est-à-dire qu'elle contient d'avantages d'impuretés, notamment de type azote, oxygène et hydrogène.

Une analyse de la composition de la phase gazeuse du protoxyde d'azote stocké dans les unités de stockage 4 et 5 a donné les résultas consignés dans le tableau I suivant.

**TABLEAU I**

| **COMPOSE GAZEUX** | **N**_{**2**}**O** | **N**_{**2**} | **O**_{**2**} | **H**_{**2**} |
|---|---|---|---|---|
| Unité 4 de stockage à 60.10⁵ Pa | 96 % | 2,7 % | 0,3 % | < 0,1 % |
| Unité 5 de stockage à 20.10⁵ Pa | 85 % | 13 % | 2 % | < 0,1 % |

Les pourcentages (%) sont des pourcentages en volume (% en vol.).

Il est d'usage de dégazer périodiquement ou en permanence, les sites de stockage 4 et 5, c'est-à-dire qu'une partie de la phase gazeuse contenue dans les stockages 4 et 5 est rejetée à l'atmosphère afin d'éviter une augmentation de la pression à l'intérieur des ces unités ou cuves de stockage.

En outre, un tel dégazage permet d'éliminer une partie des impuretés précitées contenues principalement dans la phase gazeuse.

Cependant, un tel dégazage implique un rejet intempestif vers l'atmosphère d'une partie du protoxyde d'azote (N₂O) contenu dans la phase gazeuse au sein de ces unités de stockage 4 et 5.

Cependant, comme on le voit sur la figure 1, il est possible de minimiser les quantités de N₂O rejetées vers l'atmosphère en procédant à une récupération, à une purification et à un recyclage dudit N₂O contenu dans les gaz-déchets, c'est-à-dire les gaz de dégazage ou gaz d'évents.

Plus précisément, selon l'invention, les gaz-déchets rejetés par la deuxième unité de stockage 4 sont récupérés 13 puis envoyés vers une première zone A de perméation, laquelle zone A de perméation comporte un module membranaire 10 présentant une sélectivité préférentielle pour le protoxyde d'azote, de manière à pouvoir récupérer en sortie perméat 11 dudit module membranaire 10 un gaz enrichi en protoxyde d'azote, par exemple un gaz contenant au moins 99 % de protoxyde d'azote, lequel gaz peut ensuite être renvoyé vers le premier site 2 de stockage.

Dans le mode de réalisation de la figure 1, le protoxyde d'azote issu de l'unité de stockage 4 et récupéré en 13 est à une pression supérieure à celle du site de stockage 2 au sein duquel il est renvoyé après concentration par perméation. Dès lors, aucune recompression n'est nécessaire pour acheminer le protoxyde d'azote depuis le site 4 jusqu'au site 2, via le module membranaire 10.

On comprend aisément que cet agencement est particulièrement avantageux en ternes notamment d'équipement.

En outre, on récupère en sortie retentât 12 du module membranaire 10 un gaz appauvri en protoxyde d'azote et contenant des impuretés, de l'azote, de l'oxygène et/ou de l'hydrogène, lequel gaz appauvri en N₂O peut être rejeté 30 vers l'atmosphère.

De manière analogue, les gaz-déchets issus du troisième site de stockage 5 sont récupérés en 14, puis acheminés vers une deuxième zone B de perméation, laquelle comporte deux modules 20 et 20' membranaires agencés en cascade, c'est-à-dire que la sortie perméat 21 du premier module 20 alimente le second module 20' en gaz à séparer.

Du protoxyde d'azote d'une pureté élevée, par exemple de l'ordre de 99%, est récupéré en sortie perméat 21' du second module 20' de perméation et est renvoyé vers le premier site de stockage 2.

Par ailleurs, les mélanges gazeux appauvris en protoxyde d'azote récupéré en sortie retentât 22 et 22' des modules 20 et 20' de perméation sont rejetés 30 vers l'atmosphère

Au vu de la figure 1, on comprend aisément que le procédé de l'invention permet un recyclage efficace du protoxyde d'azote contenu dans les gaz de purge ou gaz-déchets des sites de stockage 4 et 5 de protoxyde d'azote, c'est-à-dire une valorisation des gaz-déchets qui, jusqu'alors étaient rejetés vers l'atmosphère en engendrant, par là même, une pollution de l'environnement.

Les membranes utilisées pour séparer le protoxyde d'azote des autres composés sont des membranes classiques, c'est-à-dire que l'homme du métier est en mesure de sélectionner de telles membranes sachant qu'on choisit des membranes présentant une sélectivité préférentielle pour le protoxyde d'azote que pour le ou les autres composés, notamment, l'azote et/ou l'oxygène.

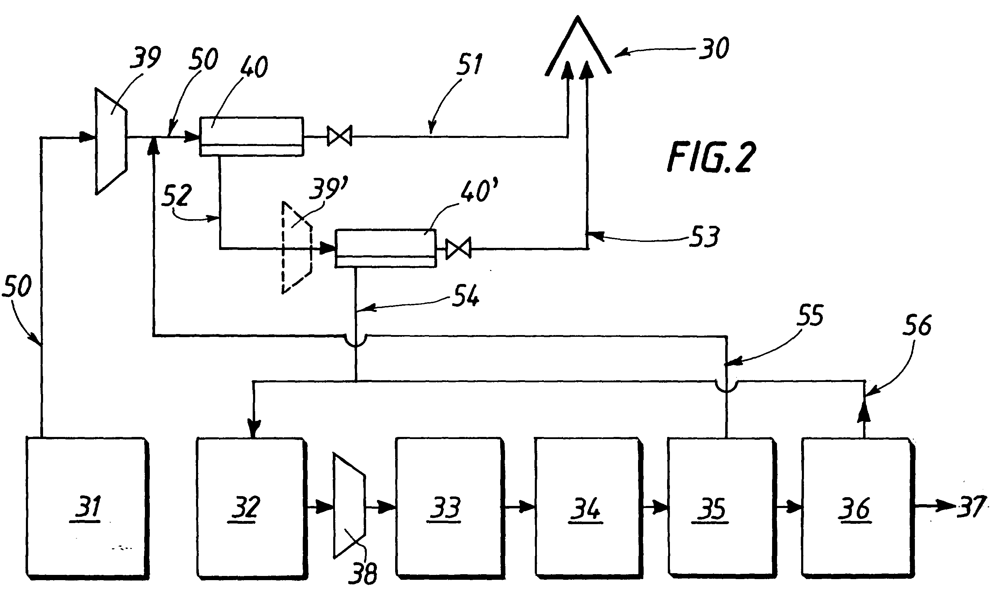

La figure 2 représente, de manière analogue à la figure 1, une installation industrielle de fabrication d'acide adipique incorporant le procédé de récupération de protoxyde d'azote selon la présente invention, de manière à pouvoir récupérer et recycler la majeure partie du protoxyde d'azote susceptible de se trouver dans les gaz-déchets émanant du processus de fabrication d'acide adipique.

Plus précisément, l'acide adipique est fabriqué dans une unité de fabrication 31 d'acide adipique rejetant des gaz-déchets riches en protoxyde d'azote (N₂O) et contenant, en outre, d'autres composés gazeux, en particulier du monoxyde de carbone (CO).

Le gaz-déchet ainsi régénéré est récupéré 50, comprimé 39 avant d'être envoyé vers une zone de perméation comportant deux modules de perméation 40 et 40' agencés en cascade.

Les gaz-déchets riches en protoxyde d'azote subissent une première séparation dans le premier module membranaire 40, de manière à récupérer, côté perméat, un gaz enrichi en protoxyde d'azote, lequel est éventuellement comprimé 39', avant de subir une nouvelle concentration par perméation dans le second module membranaire 40'.

Le mélange gazeux pauvre en protoxyde d'azote, récupéré en sortie retentât du premier module membranaire 40 et en sortie retentât du second module membranaire 40', est récupéré 51 et 53 respectivement, avant d'être rejeté à l'atmosphère 30.

Le gaz récupéré en sortie perméat 54 du second module membranaire 40' est récupéré puis envoyé vers un site de stockage 32 sous forme gazeuse, étant donné que le mélange gazeux ainsi récupéré (en 54) est constitué de protoxyde d'azote de haute pureté, c'est-à-dire d'une pureté supérieure à environ 99,9 %, les impuretés étant essentiellement du monoxyde de carbone.

Ensuite, afin de permettre sa réutilisation, le protoxyde d'azote gazeux subit successivement une compression 38, par exemple à une pression de 60.10⁵ Pa, une liquéfaction 33 éventuellement un nouveau stockage 34, par exemple sous forme liquide à une pression de 60.10⁵ Pa environ et à une température de l'ordre de 20°C, une purification plus poussée, par exemple par distillation 35 cryogénique, de manière à éliminer la majeure partie du monoxyde de carbone (CO) résiduel, éventuellement un nouveau stockage à basse température, par exemple à -20°C et à une pression de l'ordre de 20.10⁵ Pa, avant d'être envoyé vers un site d'utilisation 37.

En outre, il est également possible de récupérer les gaz-déchets riches en protoxyde d'azote rejetés lors de la purification 35 par distillation et/ou les gaz de dégazage des cuves ou moyens analogues de stockage 36, pour pouvoir le recycler.

Ainsi, le gaz-déchet produit par l'unité de purification 35 est récupéré et acheminé 55 jusqu'au module membranaire 40 afin d'y être purifié par perméation comme expliqué ci-avant.

En outre, les gaz-déchets provenant du dégazage du stockage 36 sont, quant à eux, récupérés et acheminés 56 jusque dans le stockage 32 de protoxyde d'azote gazeux avant de subir un nouveau cycle de compression 38, liquéfaction 33 et épuration 35.

Le retraitement des gaz-déchets issus du procédé de production d'acide adipique 31 est effectué par le biais du procédé selon la présente invention et permet de diminuer considérablement la quantité de protoxyde d'azote rejetée à l'atmosphère, grâce à une récupération et à un retraitement judicieux de ces gaz-déchets par perméation.

En d'autres termes, le procédé selon la présente invention permet, d'une part, de produire et valoriser la majeure partie du protoxyde d'azote contenu dans les gaz-déchets provenant de l'unité 31 de fabrication d'acide adipique et, d'autre part, de diminuer les rejets de protoxyde d'azote qui favorisent l'effet de serre et la destruction de la couche d'ozone.

### EXEMPLE

Afin de montrer l'efficacité du procédé de récupération et/ou de purification de protoxyde d'azote selon la présente invention, une sérié d'essais (A à C) a été réalisée avec des gaz-déchets dont la composition est donnée dans le tableau II suivant, à différentes pressions et températures de perméation.

Ces gaz-déchets ont été séparés par perméation au moyen d'un ou plusieurs modules de perméation.

Le gaz produit riche en protoxyde d'azote est récupéré en sortie perméat et analysé.

En outre, le rendement de production en sortie perméat a été également déterminé.

Il apparaît au vu du tableau II que le procédé selon l'invention permet de récupérer la majeure partie du protoxyde d'azote contenu dans un gaz-déchet, de manière à pouvoir valoriser ce protoxyde d'azote, c'est-à-dire le recycler, au lieu de le rejeter à l'atmosphère.

Toutefois, il est à préciser que le procédé de la présente invention n'est pas limité à la récupération des gaz-déchets issus d'une unité de fabrication de protoxyde d'azote ou d'une unité de fabrication d'acide adipique, mais peut être appliqué à tout procédé dont la mise en oeuvre engendre des gaz-déchets ou gaz d'évents riches en protoxyde d'azote.

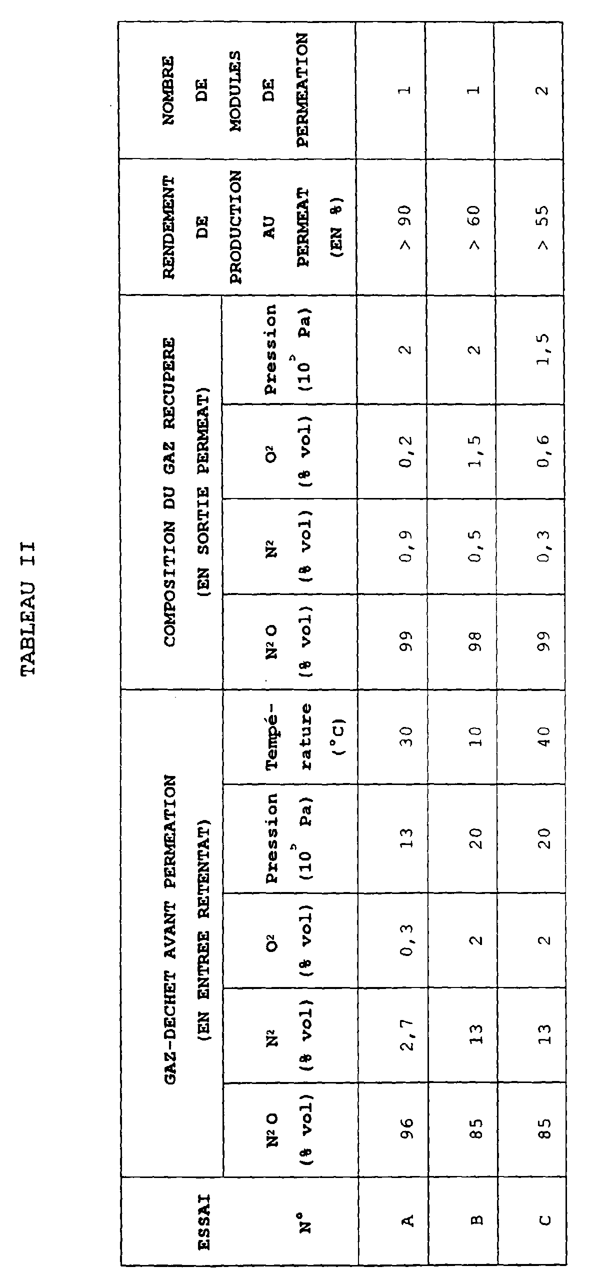

## Revendications

1. Procédé de récupération et/ou de purification d'au moins une partie du protoxyde d'azote (N₂O) contenu dans un flux de gaz-déchet contenant du protoxyde d'azote et au moins un autre composé gazeux, dans lequel :
(a) on sépare par perméation au moins une partie protoxyde d'azote contenu dans le flux de gaz-déchet, et
(b) on récupère au moins une partie du protoxyde d'azote gazeux séparé à l'étape (a).

2. Procédé selon la revendication 1, caractérisé en ce que le flux de gaz-déchet à séparer contient de 5 à 99,9 % de protoxyde d'azote, de préférence de 20 à 99,9 % en volume.

3. Procédé selon l'une des revendications 1 ou 2, caractérisé en ce que le flux de gaz-déchet à séparer contient, en outre, au moins un composé gazeux choisi dans le groupe formé par l'azote, l'oxygène et le monoxyde de carbone.

4. Procédé selon l'une des revendications 1 à 3, caractérisé en ce que la perméation est réalisée par passage du flux de gaz-déchet à séparer dans au moins un module de perméation, de préférence au moins un module à fibres membranaires.

5. Procédé selon l'une des revendications 1 à 4, caractérisé en ce qu'à l'étape (b), on récupère un gaz contenant de 80 à 100 % de protoxyde d'azote, de préférence au moins 90 % de protoxyde d'azote.

6. Procédé selon l'une des revendications 1 à 5, caractérisé en ce que le flux de gaz-déchet à séparer est un gaz de rejet émanant d'un procédé industriel, de préférence un gaz de rejet émanant d'un procédé de fabrication d'acide adipique, d'un procédé de fabrication de protoxyde d'azote, d'un procédé de fabrication d'acide nitrique, d'un procédé de fabrication d'acide glycoxylique ou d'un procédé de fabrication de phénol.

7. Procédé selon l'une des revendications 1 à 6, caractérisé en ce que le gaz-déchet à séparer est à une température comprise entre -30°C et +80°C, de préférence -20 °C à +60°C.

8. Procédé selon l'une des revendications 1 à 7, caractérisé en ce que le gaz-déchet est à une pression de 10⁵ Pa à 10⁷ Pa, de préférence de 10⁶ Pa à 6.10⁶ Pa.

9. Installation industrielle de récupération et/ou de purification d'au moins une partie du protoxyde d'azote (N₂O) contenu dans un flux de gaz-déchet contenant du protoxyde d'azote et au moins un autre composé gazeux, comprenant :
- au moins une source de flux de gaz-déchet contenant du protoxyde d'azote et au moins un autre composé gazeux,
- des moyens de perméation permettant de séparer par perméation au moins une partie protoxyde d'azote contenu dans le flux de gaz-déchet, et
- des moyens de récupération d'au moins une partie du protoxyde d'azote séparé par les moyens de perméation.

10. Installation selon la revendication 9, caractérisée en ce que la source de flux de gaz-déchet est une unité industrielle mettant en oeuvre un procédé industriel rejetant ledit gaz-déchet, de préférence une unité de fabrication d'acide adipique, une unité de fabrication de protoxyde d'azote, une unité de fabrication de phénol, une unité de fabrication d'acide glycoxylique ou une unité de fabrication d'acide nitrique.
